# EUROPEAN PATENT APPLICATION

(11) **EP 2 775 158 A1**
(43) Date of publication of application: **10.09.2014**
(21) Application number: 12846077.1
(22) Date of filing: 25.10.2012
(51) Int. Cl.: F16D 13/70

(54) **CLUTCH DEVICE**

(30) Priority: 31.10.2011 JP 2011238625
(71) Applicant: Aisin Seiki Kabushiki Kaisha, Kariya-shi, Aichi 448-8650 (JP)
(72) Inventor: KOBAYASHI, Susumu, Kariya-shi Aichi 448-8650 (JP); NAKAGAWA, Soji, Kariya-shi Aichi 448-8650 (JP); KIDA, Tokiyoshi, Kariya-shi Aichi 448-8650 (JP); BABA, Isamu, Kariya-shi Aichi 448-0027 (JP); KUMAOKA, Tsuyoshi, Kariya-shi Aichi 448-0027 (JP)
(74) Representative: Kramer - Barske - Schmidtchen
(86) International application number: PCT/JP2012/077535
(87) International publication number: WO 2013/065559

(57) **Abstract**

To provide is a clutch device for which warping of the pressure plate can be suppressed while exploiting advantage of an integrated-type pressure plate. This clutch device is equipped with: a clutch disk, which is arranged concentrically with and capable of rotation with respect to a flywheel which is arranged rotatably, and capable of frictionally engaging the flywheel; and a pressure plate, which is arranged so as to press the clutch disk toward the flywheel, and is capable of frictionally engaging the clutch disk. On the back surface of the pressure plate, which is the opposite side from a surface making frictional contact with the clutch disk, there is a stress relaxation section which conforms to elongation when frictional surface of the pressure plate undergoes thermal expansion, and thereby relaxes a stress which causes warping of the pressure plate. The stress relaxation section is a groove(s) formed on the back surface of the pressure plate.

## Description

### [TECHNICAL FIELD]

This invention relates to a clutch apparatus having a mechanism that thrusts a clutch disk via a pressure plate.

### [BACKGROUND]

The present application claims priority based on JP Patent Application 2011-238625 filed in Japan on October 31, 2011, the entire contents thereof being incorporated by reference into the present Application.
In an automotive vehicle, a clutch apparatus is provided on a path of motive power transmission between an engine and a speed change apparatus (transmission system) in order not to transmit the rotational motive power of the engine to the transmission during engine starting or gear change etc. In the clutch apparatus, in order to enable the engine and the transmission system to be connected to or disconnected from each other, the clutch actuating power is transmitted by a manual operation (manipulation by hand or by foot depressing operation) of an actuation mechanism, such as a clutch lever or a clutch pedal, via a release mechanism, such as a hydraulic or a link system. In general, the clutch apparatus has such a structure in which a clutch disk, adapted to transmit the rotational motive power to the transmission system, is pressed by a pressure plate onto a flywheel to which the rotational motive power is transmitted from the engine. The pressure plate is biased toward the clutch disk by a diaphragm spring that can be actuated by the release mechanism. The rotational motive power of the engine is transmitted to the transmission system by the clutch disk being sandwiched between, and brought into frictional engagement with, the flywheel and the pressure plate.

In the clutch apparatus, when the rotational motive power from the engine is transmitted toward the transmission system, frictional heat is generated on frictional surfaces of the pressure plate and the clutch disk. Hence, a temperature difference is produced between the frictional surface and the back side surface (the surface directed toward the diaphragm spring) of the pressure plate. This results in a difference between the amounts of elongation of the back side surface and the frictional surface of the pressure plate, thus causing the pressure plate to become deformed. If the pressure plate is deformed in increasing amounts, the torque transmitting capacity is lowered, thus possibly resulting in troubles such as clutch slip, rise in temperature or else.

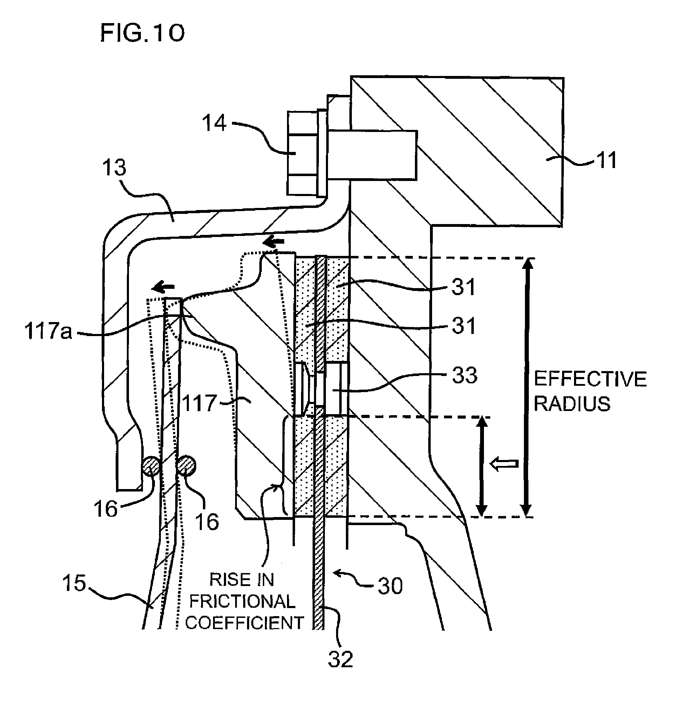

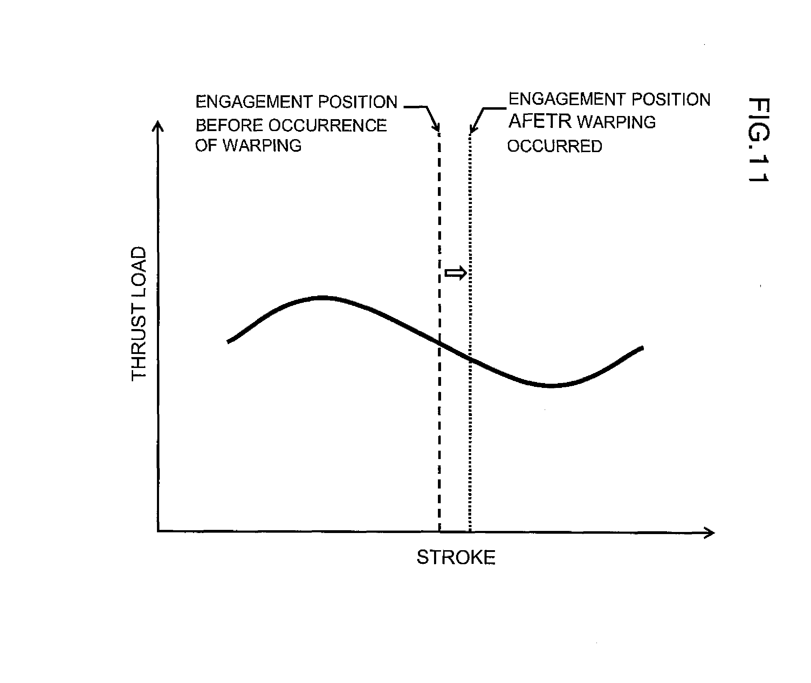

In other words, if a pressure plate 117 is deformed, the pressure plate 117 is warped in a direction in which its outer rim becomes detached from the clutch disk 30. As a result, a point at which the diaphragm spring 15 thrusts the pressure plate 117 shifts to an opening side to decrease the thrust load applied by the diaphragm spring 15 to the pressure plate 117 as well as to decrease the torque transmitted (see Fig. 10 and 11). Moreover, as the pressure plate 117 is warped, the effective radius of each of the frictional surfaces of the pressure plate 117 and the clutch disk 30, viz., the radius of the torque transmitting operation, decreases. That is, as the pressure plate becomes warped, the outer rim of the pressure plate 117 is shifted away from the clutch disk 30 so that the frictional surface of the pressure plate 117 shifts toward the inner rim side, thus reducing the torque transmitted. Moreover, as the pressure plate 117 is warped, the frictional surfaces of the pressure plate 117 and the clutch disk 30 are reduced in area, such that, if slips occur on the frictional surfaces, the latter may be subject to rapid rise in temperature. The friction material 31 then is deteriorated, while the frictional coefficient is lowered to decrease the torque transmitted. Ultimately, the engine torque may not be transmitted to driving wheels, such that it may become difficult or impossible for vehicle to climb uphill.

Patent Literature 1 shows a friction clutch designed to suppress such warping of the pressure plate from occurring. In the friction clutch, the pressure plate is composed by a plurality of toroidally-shaped plate members. A rivet is introduced into a radially oblong hole bored in these plate members, which are then staked and caulked in position along with a corrugated spring interposed. In this formulation, as the plate members are expanded or contracted, they may be moved radially relative to one another, thus enabling suppression of warping of the pressure plate.

### [Citation List]

Patent Literature 1: Japanese Patent Publication No.H05-79286A

### [SUMMARY]

### [Technical Problem]

The following analysis is given in accordance with the present invention.

It is noted that the entire contents of disclosure of the above Patent Literature 1 are to be incorporated herein by reference. The following analysis is given from the standpoint of the present invention.
In the assembled pressure plate, such as that of Patent Literature 1 above, many component parts are necessary, thus raising the cost as compared to the case of a one-piece pressure plate. Moreover, the pressure plate of the Patent Literature 1 is made up by a plural number of the plate members, and hence is low in heat dissipation (heat conduction) performance, while being lower in strength than the one-piece pressure plate. In addition, in the pressure plate, disclosed in Patent Literature 1, the plate members may be moved radially relative to each other. There is thus a possibility that, due to off-center positions of the plate members relative to one another, the friction material of the clutch disk is more susceptible to deterioration than in the one-piece pressure plate.

It is therefore an object of the present invention to provide a clutch apparatus in which the pressure plate may be suppressed from becoming warped while the advantages proper to the one-piece type pressure plate are maintained.

### Solution to the Problem

In one aspect, the present invention provides a clutch apparatus comprising a clutch disk arranged rotatably and coaxially with a flywheel which is arranged rotatably, with the clutch disk being capable of frictionally engaging with the flywheel, and a pressure plate configured for pressing the clutch disk onto the flywheel and capable of frictionally engaging with the clutch disk. The pressure plate includes a stress relaxing section in its back side surface which is opposite its frictional surface for the clutch disk. The stress relaxing section allows the back side surface of the pressure plate to accommodate elongation at the time of thermal expansion of the frictional surface of the pressure plate so as to relax a stress responsible for warping caused to the pressure plate. The stress relaxing section is a groove(s) formed in the back side surface of the pressure plate.

### [Advantageous Effect of the Invention]

According to the present invention, in which the groove(s) as the stress relaxing section is provided in the back side surface of the pressure plate, the back side surface is capable of accommodating the elongation produced at the time of thermal expansion of the frictional surface of the pressure plate. The warping (otherwise) caused at the time of thermal expansion of the pressure plate may thus be reduced. Moreover, since the bottom surface of the groove of the pressure plate is made to approach its frictional surface, a difference between an average temperature of the bottom surface of the groove and a temperature of the frictional surface may be reduced, and hence the warping (otherwise) caused at the time of thermal expansion of the pressure plate may be expected to be decreased. In addition, since the pressure plate is a single piece component, it is possible to suppress demerits such as an increased number of component parts, rise in cost, poor strength, low heat dissipation (heat conduction) performance, or deterioration of the friction material of the clutch disk, as compared to the assemble-type pressure plate.

### [BRIEF DESCRIPTION OF THE DRAWINGS]

Fig.1 is a cross-sectional view schematically showing a portion along line X-X' of Fig.2 of a clutch apparatus of a formulation according to Example 1 of the present invention;
Fig.2 is a plan view, viewed from a back side, schematically showing a formulation of a pressure plate in the clutch apparatus according to Example 1 of the present invention;
Figs.3(A) and 3(B) schematically illustrate a formulation of the pressure plate in the clutch apparatus according to Example 1 of the present invention;

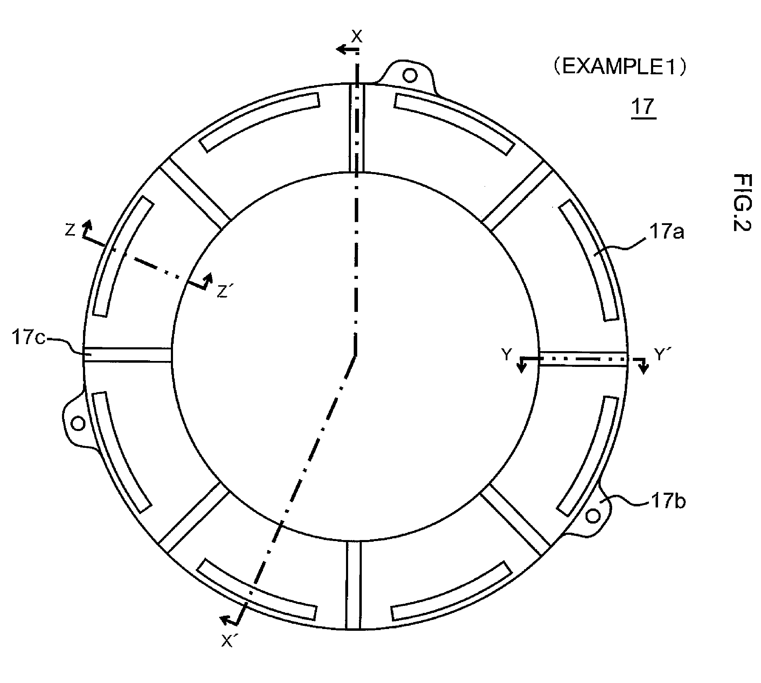

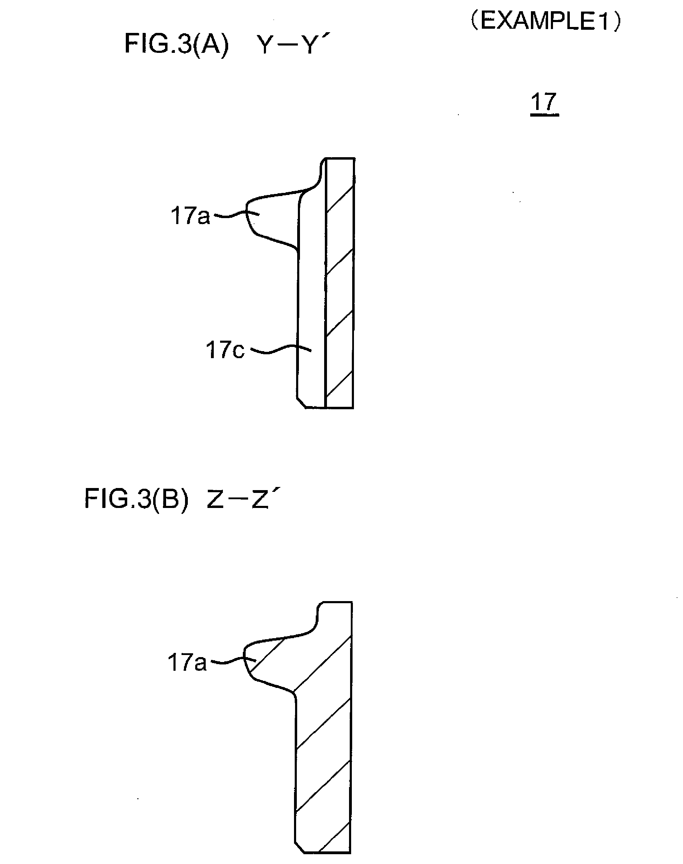

Fig.3(A) is an enlarged cross-sectional view taken along line Y-Y' of Fig.2; and
Fig.3(B) is an enlarged cross-sectional view taken along line Z-Z' of Fig.2;

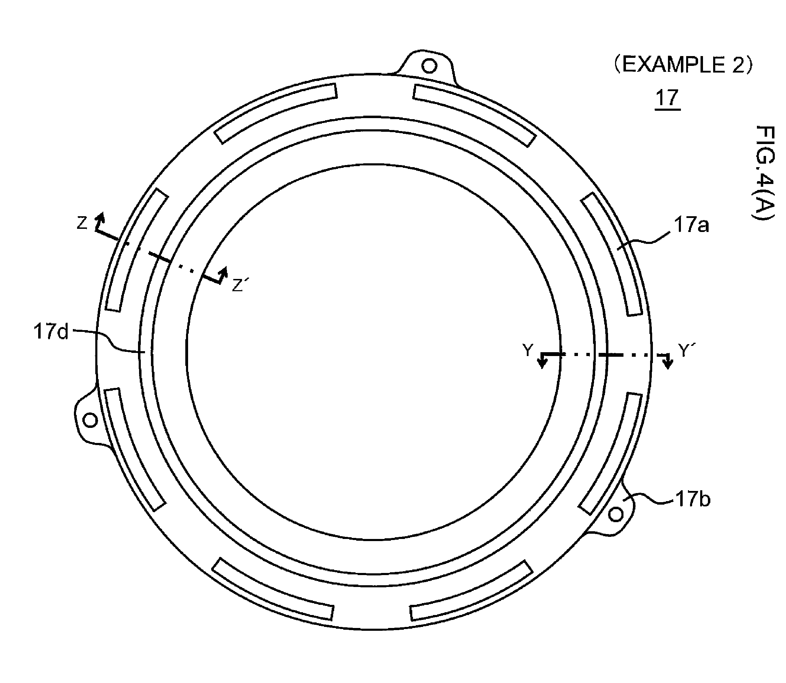

Fig.4 is a plan view, viewed from the back side, schematically showing a formulation of a pressure plate in a clutch apparatus according to Example 2 of the present invention;

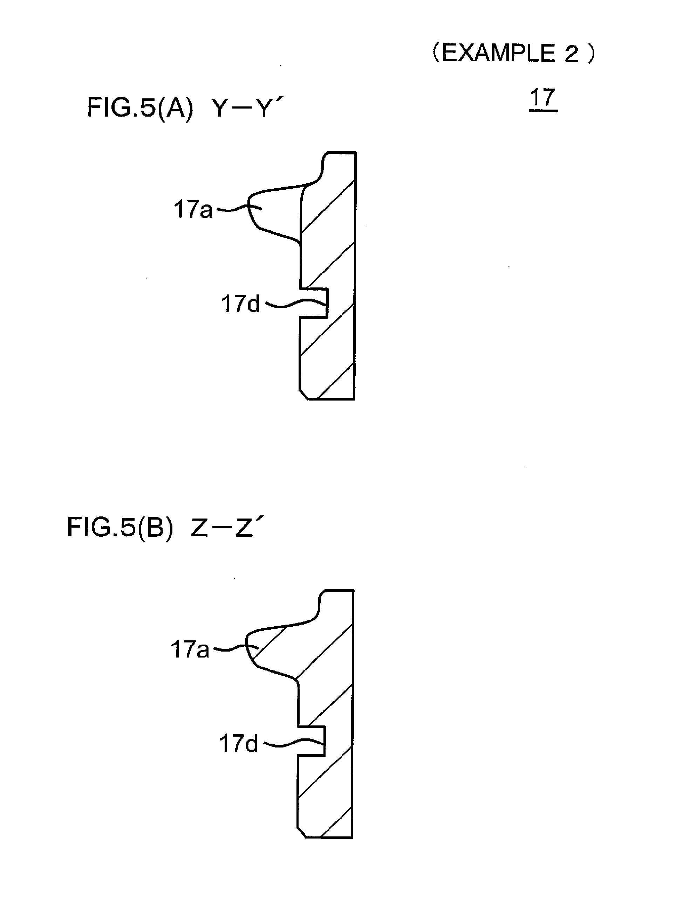

Figs.5(A) and 5(B) schematically illustrate a formulation of the pressure plate in the clutch apparatus according to Example 2 of the present invention;
Fig.5(A) is an enlarged cross-sectional view taken along line Y-Y' of Fig.4; and
Fig.5(B) is an enlarged cross-sectional view taken along line Z-Z' of Fig.4;

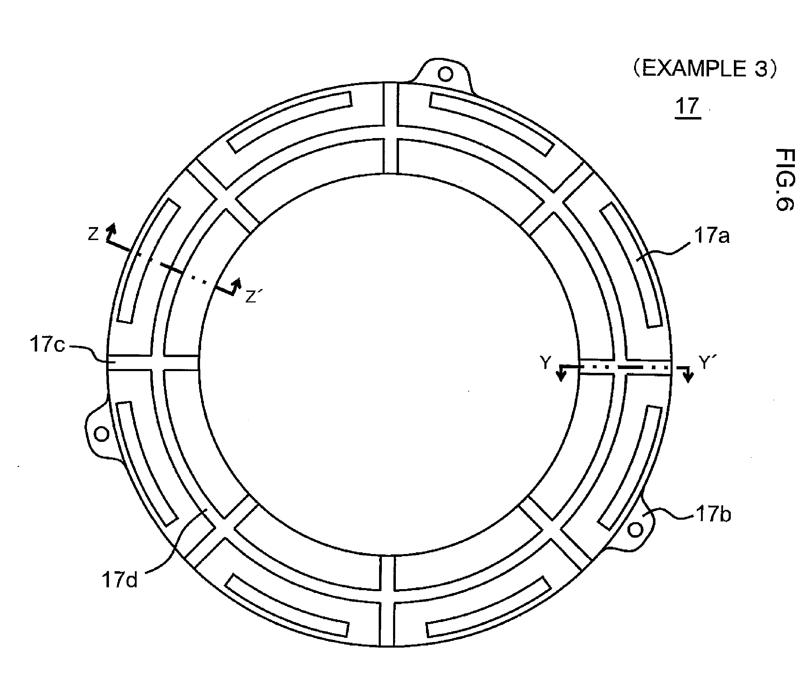

Fig.6 is a plan view, viewed from the back side, schematically showing a formulation of a pressure plate in a clutch apparatus according to Example 3 of the present invention;

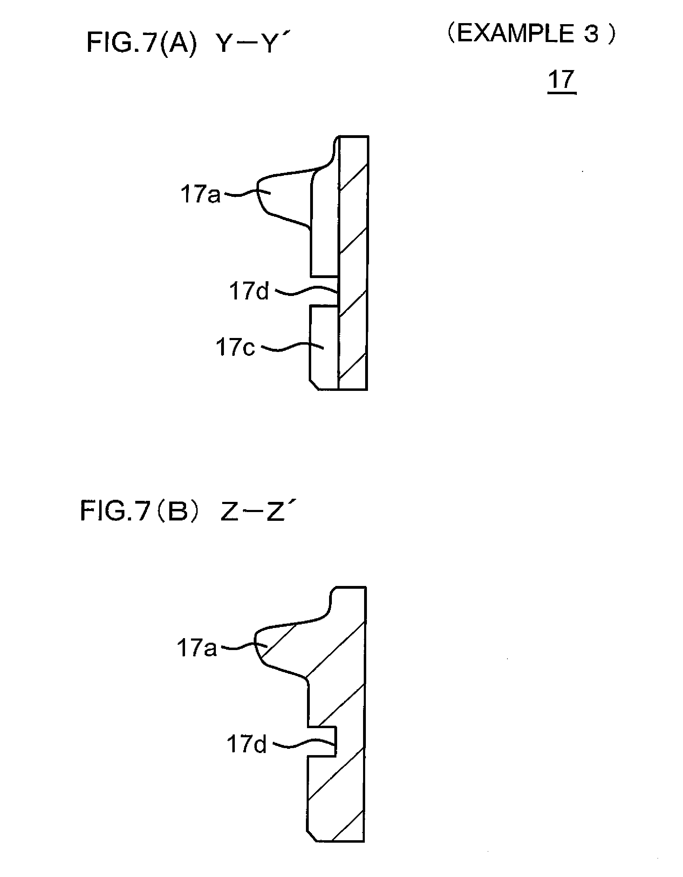

Figs.7(A) and 7(B) schematically illustrate a formulation of the pressure plate in the clutch apparatus according to Example 3 of the present invention;
Fig.7(A) is an enlarged cross-sectional view taken along line Y-Y' of Fig.6; and
Fig.7(B) is an enlarged cross-sectional view taken along line Z-Z' of Fig.6;

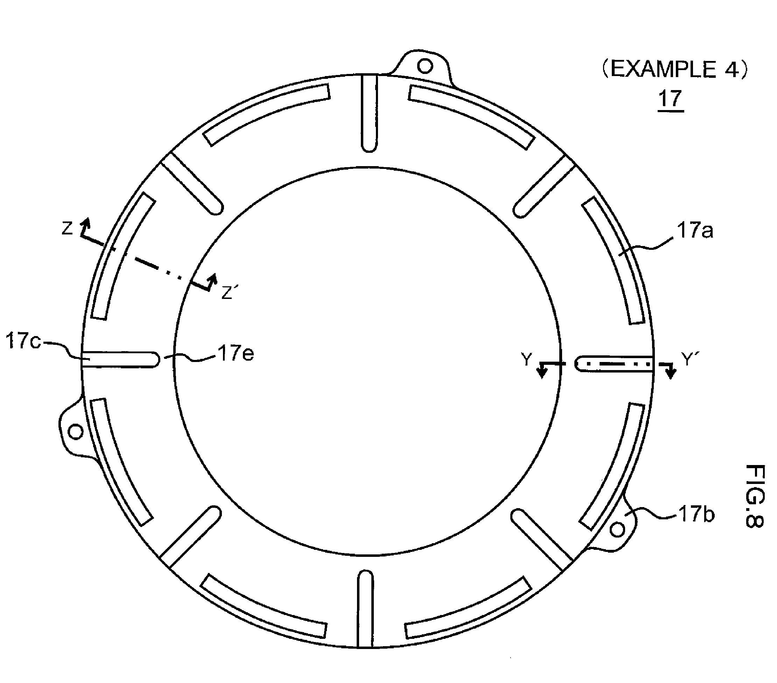

Fig.8 is a plan view, viewed from the back side, schematically showing a formulation of a pressure plate in a clutch apparatus according to Example 4 of the present invention;

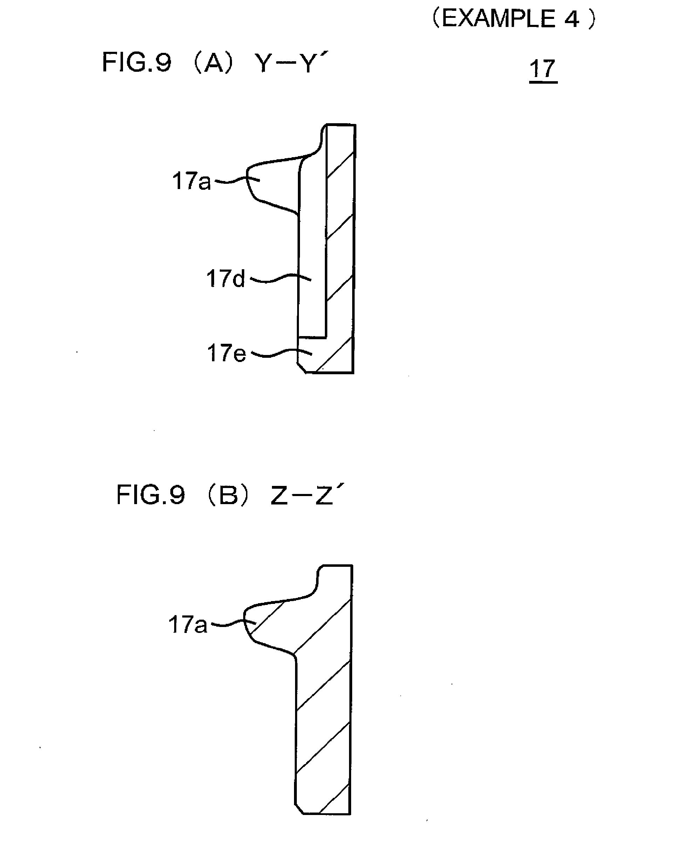

Figs.9(A) and 9(B) schematically illustrate a formulation of the pressure plate in the clutch apparatus according to Example 4 of the present invention;
Fig.9(A) is an enlarged cross-sectional view taken along line Y-Y' of Fig.8; and
Fig.9(B) is an enlarged cross-sectional view taken along line Z-Z' of Fig.8; and
Fig. 10 is a schematic view for illustrating warping of a pressure plate in a conventional clutch apparatus;
Fix. 11 is a graph showing the relationship between thrust load by a diaphragm spring and stroke of a release bearing.

### Mode for Carrying Out the Invention

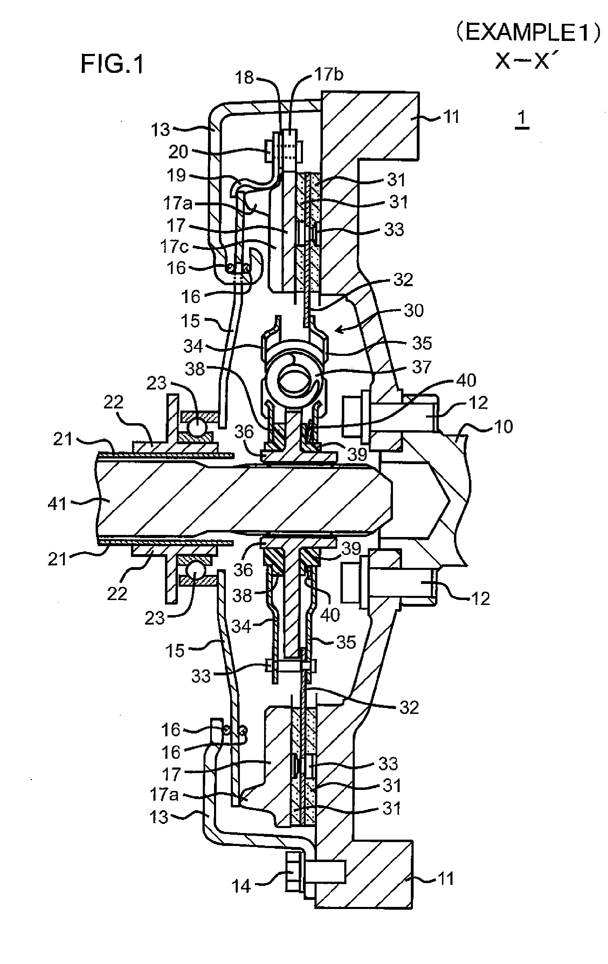

A clutch apparatus in a mode of the present invention includes a clutch disk (30 of Fig.1) arranged rotatably and coaxially with a flywheel (11 of Fig.1) arranged rotatably, in which the clutch disk is capable of frictionally engaging with the flywheel. The clutch apparatus also includes a pressure plate (17 of Fig.1) which is configured for pressing the clutch disk onto the flywheel and which is capable of frictionally engaging with the clutch disk. The pressure plate includes a stress relaxing section in its back side surface which is opposite its frictional surface for the clutch disk. The stress relaxing section allows the back side surface of the pressure plate to accommodate elongation at the time of thermal expansion of the frictional surface of the pressure plate so as to relax a stress responsible for warping (otherwise) caused to the pressure plate. The stress relaxing section is a groove(s) (17c of Fig.1; 17d of Fig.4; 17c, 17d of Fig.6 and 17c of Fig.8) formed in the back side surface of the pressure plate.

In the clutch apparatus according to the present invention, preferably the groove(s) is so formed as to allow for widening in size of the pressure plate in a circumferential direction, in a radial direction or in both the circumferential and radial directions about a rotational axis of the pressure plate as center.

In the clutch apparatus according to the present invention, preferably the groove(s) is formed for extending in the circumferential direction, in the radial direction or in both the circumferential and radial directions about the rotational axis of the pressure plate as center.

In the clutch apparatus according to the present invention, preferably the pressure plate has a reinforcement portion(s) which is formed by embedding in a part of the groove(s).

In the clutch apparatus according to the present invention, preferably the groove(s) is formed radially of the rotational axis of the pressure plate as center, and the reinforcement portion(s) is formed on a line(s) of extension of the groove(s).

In the clutch apparatus according to the present invention, preferably the pressure plate includes a plurality of circumferentially extending lug (protrusion) portion(s), each operating as a point (or action site) acted on by a diaphragm spring, and the groove(s) is formed on both circumferential sides of the lug portion(s).

In the clutch apparatus according to the present invention, preferably the pressure plate includes a plurality of circumferentially extending lug (protrusion) portion(s), each operating as a point (or action site) acted on by a diaphragm spring, with the groove(s) being annular and formed more radially inwardly than the lug portion(s).

In the clutch apparatus according to the present invention, preferably the groove(s) is formed radially on both circumferential sides of the lug portion(s).

It is noted that symbols for reference to the drawings, if appended in the present application, are so appended merely to help understanding and the invention is not to be limited to the modes illustrated.

### [Example 1]

A clutch apparatus according to Example 1 of the present invention will now be described with reference to the drawings. Fig.1 is an axial cross-sectional view schematically showing a portion along line X-X' of Fig.2 of the clutch apparatus of a formulation according to Example 1 of the present invention. Fig.2 is a plan view, viewed from the back side, schematically showing a formulation of a pressure plate in the clutch apparatus according to Example 1 of the present invention. Figs.3(A), 3(B) schematically illustrate the formulation of the pressure plate in the clutch apparatus according to Example 1 of the present invention, wherein Fig.3(A) is an enlarged cross-sectional view taken along line Y-Y' of Fig.2 and Fig.3(B) is an enlarged cross-sectional view taken along line Z-Z' of Fig.2

A clutch apparatus 1 is such an apparatus that transmits power of rotation (torque) from a crankshaft 10 of an engine, not shown, to an input shaft 41 for a transmission system so that connection of the power of rotation from the crankshaft of the engine to the input shaft for the transmission system will be turned on/off at will (see Fig.1). The clutch apparatus 1 can be actuated by a release device, such as for example a lever mechanism, a hydraulic piston mechanism or the like, which causes a release bearing 23 to be moved toward the engine in an axial direction (toward right in Fig.1) to turn off rotational power connection from the crankshaft 10 to the input shaft 41 for the transmission system. The clutch apparatus 1 includes, as principal components, a flywheel 11, bolt(s) 12, a clutch cover 13, bolt(s) 14, a diaphragm spring 15, fulcrum member(s) 16, a pressure plate 17, strap(s) 18, a retaining member(s) 19, rivet(s) 20, a tubular member 21, a sleeve 22, a release bearing(s) 23 and a clutch disk 30.

The flywheel 11 is an annular inertia member. The flywheel 11 is securely fastened at its inner rim part to the crankshaft 10 by a plurality of bolts 12 so that the flywheel may revolve in unison with the crankshaft 10. The flywheel 11 is also securely fastened at its outer rim part to the clutch cover 13 by a plurality of bolts 14 so that the flywheel may revolve in unison with the clutch cover 13.

The clutch cover 13 is an annular member configured to cover an outer rim part of the clutch disk 30 (see Fig.1). The clutch cover 13 has its outer rim part securely fastened by bolt(s) 14 to the flywheel 11. The clutch cover 13 is spaced apart at its inner rim part from the flywheel 11 so as to cover the outer rim part of the clutch disk 30 and the pressure plate 17. An extreme end of the inner rim of the clutch cover 13 carries (and retains) two fulcrum members 16 disposed to clamp both sides of a halfway part of the diaphragm spring 15. The two fulcrum members 16 are caulked and staked by the clutch cover 13 in each of a plurality of voids disposed (formed) between neighboring lever sections of the diaphragm spring 15. The clutch cover 13 swingably (pivotally) supports the diaphragm spring 15 about the fulcrum members 16 as fulcrum points (sites). The clutch cover 13 is elastically connected to the pressure plate 17 through the strap(s) 18 and performs rotation in unison with the pressure plate 17.

The diaphragm spring 15 is a Belleville (conically shaped) spring which is an elastic member comprised of an annular part and a plurality of lever sections extending radially inward from the annular part (see Fig.1). The diaphragm spring 15 is swingably mounted at its halfway portion between the two fulcrum members 16 carried by the clutch cover 13. The diaphragm spring 15 has its engine-side outer rim surface on the right-hand side of Fig.1 abutted onto a plurality of lug (protrusion) portion(s) 17a of the pressure plate 17. In order not to become detached from the lug portion(s) 17a, the diaphragm spring 15 has a transmission-side outer rim surface on the left-hand side of Fig.1 retained by the retaining member(s) 19 in turn secured by the rivet(s) 20 onto the pressure plate 17. The diaphragm spring 15 has its transmission-side inner rim surface on the left-hand side of Fig.1 abutted onto a rotational ring of the release bearing 23. The diaphragm spring 15 is tilted about the fulcrum members 16 as fulcrum(s) so that the outer rim part of the diaphragm spring 15 biases (thrusts) the pressure plate 17 onto the flywheel 11 at the same time as the inner rim part of the diaphragm spring 15 biases the release bearing 23 toward the transmission system, that is, toward the left-hand side of Fig.1. The diaphragm spring 15 biases the pressure plate 17 so as to bring a friction material 31 of the clutch disk 30 into pressed contact with the flywheel 11. When the inner rim part of the diaphragm spring 15 is thrust by the release bearing 23 toward the flywheel 11, the outer rim part thereof is shifted (displaced) in a direction away from the flywheel 11 to release the pressure plate 17 from the state of being biased toward the flywheel 11.

The fulcrum members 16 are annular members operating as fulcrum points (or sites) for the swinging (pivoting) movement of the diaphragm spring 15 (see Fig.1). Two of the fulcrum members 16 are provided on both sides at the halfway portion of the diaphragm spring 15, and are caulked and staked in a plurality of voids disposed between neighboring lever sections of the diaphragm spring 15.

The pressure plate 17 is an annular one-piece plate member adapted for thrusting a frictional sliding section of the clutch disk 30 onto the flywheel 11 (see Fig.1 to 3). A surface of the pressure plate 17 directed toward the engine (toward the right-hand side of Fig.1) acts as a frictional surface adapted for frictionally sliding against the friction material 31 of the clutch disk 30. The pressure plate 17 includes the plurality of lug portion(s) 17a on its surface directed toward the transmission system (toward the left-hand side of Fig.1), that is, on its back side surface opposite the frictional surface. The lug portion(s) are formed extending (protruding) toward the transmission side (toward the left-hand side of Fig.1). The lug portion(s) 17a are destined to bear against and to be biased by action points (sites) of the diaphragm spring 15. A plurality of seat portions 17b is formed at an extreme end of the outer rim of the pressure plate 17. Each of the seat portions 17b serves for connecting the strap(s) 18 and the retaining member(s) 19 to the pressure plate 17 by the rivets 20. The pressure plate 17 is elastically connected to the clutch cover 13 by the strap(s) 18, designed as a leaf spring(s), so that the pressure plate will revolve in unison with the clutch cover 13.

In a surface of the pressure plate 17 directed toward the transmission system (toward the left-hand side of Fig.1) or in a back side surface thereof opposite the frictional surface, there is formed a groove(s) 17c of a preset depth (see Figs.1 to 3).
The groove 17c allows the pressure plate 17 to accommodate elongation caused by thermal expansion of the frictional surface thereof and thus acts as a stress relaxing section that relaxes or decreases a stress that causes warping of the pressure plate 17 as indicated by a dotted line in Fig. 10 for the pressure plate 117. A plurality of the grooves 17c is formed extending radially with respect to the rotational axis of the pressure plate 17. It is observed that a difference in temperature may be produced between the back side surface of the pressure plate 17 (surface of the pressure plate facing the diaphragm spring 15) and its frictional surface (surface facing the frictional surface 31). Such difference in temperature may give rise to a difference between the amounts of elongation due to thermal expansion of the back side surface and the frictional surface of the pressure plate 17. However, by providing the groove(s) 17c in the back side surface of the pressure plate 17, such groove(s) 17c operates to absorb a difference between the amounts of elongation due to thermal expansion of the back side surface and the frictional surface of the pressure plate. That is, the groove(s) 17c of the pressure plate 17 allows for and accommodates the elongation of the pressure plate in the circumferential direction. Hence, the pressure plate 17 may be prevented from becoming deformed so as to suppress reduction in the torque transmitting capacity as well as to prevent the occurrence of clutch slips, rise in temperature or the like troubles. Modifications of the groove(s) 17c will be explained later in connection with further Examples.

The tubular member 21 is mounted on an outer periphery of the input shaft 41 for the transmission system, and is carried by a housing, not shown, of the transmission system. An inner circumferential surface of the tubular member 21 is spaced apart from the input shaft 41 for the transmission system. The sleeve 22 is mounted axially slidably on an outer circumferential surface of the tubular member 21. The sleeve 22 is a tubular member to which is fastened a stationary ring (inner lace) of the release bearing 23. The sleeve 22 may be slid axially under the force of operation applied from a release mechanism such as a hydraulic or link mechanism. The release bearing 23 is a ball bearing operating to push or thrust an inner rim of the rotating diaphragm spring 15 to disconnect the clutch apparatus. The release bearing 23 is configured so that its rotating ring (center lace), abutting onto the diaphragm spring 15, is carried via a plurality of balls on the stationary ring. The release bearing 23 is slidable in unison with the sleeve 22.

The clutch disk 30 is a circular disk-shaped assembly disposed between the flywheel 11 and the pressure plate 17. The clutch disk 30 includes, on its outer rim, a frictional sliding section comprised of the friction material 31 securely fastened by a rivet (s) 33 on both sides of a lining plate 32. It is at this frictional sliding section that the clutch disk is sandwiched (interposed) between the flywheel 11 and the pressure plate 17. The clutch disk 30 is securely fastened by the rivets 33 to side plates 34, 35 at an inner rim part of the lining plate 32. A hub member 36 is disposed between the side plates 34, 35. The clutch disk has the function to buffer (absorb) the torsion (torque fluctuations) between the side plates 34, 35 and the hub member 36 based on the force of elasticity of an elastic member(s) 37. In the clutch disk 30, a thrust member 38 is disposed between the side plate 34 and the hub member 36, while a thrust member 39 and a Belleville spring 40 are disposed between the side plate 35 and the hub member 36. Thus, the clutch disk also has a function to buffer (absorb) the torsion (torque fluctuations) between the side plates 34, 35 and the hub member 36 based on the force of friction between the thrust members 38, 39 and the hub member 36. The clutch disk 30 is in splined engagement with the input shaft 41 for the transmission system at an inner rim of the hub member 36 so that the clutch disk is axially movable but non-rotatable relative to the input shaft 41 for the transmission system. It is noted that the input shaft 41 is rotatably supported by the housing, not shown, of the transmission system via a bearing, not shown, in order to transmit the power of rotation (torque) from the clutch disk 30 to the transmission system, also not shown.

In present Example 1, in which the groove(s) 17c is formed in the back side surface of the pressure plate 17, it is possible to allow the back side surface of the pressure plate 17 to accommodate the elongation of the frictional surface at the time of thermal expansion of the pressure plate 17 so as to decrease the warping caused on the pressure plate 17 at the time of thermal expansion. In addition, the bottom surface of the groove 17c of the pressure plate 17 may be made to approach its frictional surface such that a difference between the average temperature of the back surface of the pressure plate 17 and the temperature of the frictional surface may be reduced with the result that warping of the pressure plate 17 may be expected to be decreased. Moreover, since the pressure plate 17 is a single piece component, the number of components may be made lesser than in an assemble type pressure plate to decrease the cost. On the other hand, in the one-piece type pressure plate 17, as contrasted to the assemble type pressure plate, it is possible to suppress reduction in its strength as well as reduction in its heat dissipation or conduction performance. Also, in the one-piece pressure plate 17, as contrasted to the assemble type pressure plate, there is no relative movement between the plate components to render it possible to suppress deterioration of the friction material 31 of the clutch disk 30.

### [Example 2]

A clutch apparatus according to Example 2 of the present invention will now be described with reference to the drawings. Fig.4 is a plan view, viewed from the back side, schematically showing a formulation of a pressure plate in the clutch apparatus according to Example 2 of the present invention. Figs.5(A), 5(B) schematically illustrate a formulation of a pressure plate in the clutch apparatus according to Example 2 of the present invention, wherein Fig.5(A) is an enlarged cross-sectional view taken along line Y-Y' of Fig.4 and Fig.5(B) is an enlarged cross-sectional view taken along line Z-Z' of Fig.4.

In Example 2, a modification of Example 1, a groove 17d in the back side surface of the pressure plate 17 is formed extending circumferentially, about the rotational axis of the pressure plate 17 as center, like a ring, in place of extending radially. The groove 17d acts as a stress relieving or relaxing portion that improves the ease with which the pressure plate 17 accommodates the elongation caused by thermal expansion of the frictional surface thereof to thereby relax or decrease the stress liable to cause warping of the pressure plate17. Such warping may be one shown for a pressure plate 117 as indicated by a dotted line in Fig.10. One or a plurality of the grooves 17d may be formed as extending in the circumferential direction. It is observed that a difference in temperature may be produced between the back side surface of the pressure plate 17 (surface of the pressure plate facing the diaphragm spring 15 of Fig.1) and the frictional surface thereof (surface facing the frictional surface 31 of Fig.1). Such difference in temperature may give rise to a difference between the amounts of elongation due to thermal expansion of the back side surface and the frictional surface of the pressure plate 17. However, since the groove 17d is provided in the back side surface of the pressure plate 17, a difference between the amounts of elongation caused by thermal expansion of the back side surface and the frictional surface of the pressure plate 17 can be absorbed by the groove(s) 17d. That is, the groove(s) 17d in the pressure plate 17 allows for elongation in the radial direction. Hence, the pressure plate 17 can be prevented from becoming deformed, to suppress the torque transmission capacity from being lowered as well as to prevent occurrence of clutch slips, rise in temperature or the like troubles. In other respects, the formulation of the present Example is the same as that of Example 1.

Present Example 2 gives rise to advantageous effects similar to those derived in Example 1.

### [Example 3]

A clutch apparatus according to Example 3 of the present invention will now be described with reference to the drawings. Fig.6 is a plan view, viewed from the back side, schematically showing a formulation of a pressure plate in the clutch apparatus according to Example 3 of the present invention. Figs.7(A), 7(B) schematically illustrate a formulation of a pressure plate in the clutch apparatus according to Example 3 of the present invention, wherein Fig.7(A) is an enlarged cross-sectional view taken along line Y-Y' of Fig.6 and Fig.7(B) is an enlarged cross-sectional view taken along line Z-Z' of Fig.6.

In Example 3, a modification of Examples 1 and 2, the radial groove(s) 17c and the circular groove 17d, formed in the back side surface of the pressure plate 17, are combined together. It is observed that the difference in temperature may be produced between the back side surface of the pressure plate 17, corresponding to the surface of the pressure plate facing the diaphragm spring 15 in Fig.1, and the frictional surface thereof, corresponding to the surface facing the frictional surface 31 in Fig.1. Such difference in temperature may give rise to a difference between the amounts of elongation due to thermal expansion of the back side surface and the frictional surface of the pressure plate 17. However, by providing the grooves 17c, 17d in the back side surface of the pressure plate 17, the difference between the amounts of elongation due to thermal expansion of the back side surface and the frictional surface of the pressure plate 17 can be absorbed by the grooves 17c, 17d. That is, the grooves 17c in the pressure plate 17 allow for elongation in the circumferential direction, while the groove 17d in the pressure plate allows for elongation in the radial direction. Hence, the pressure plate 17 can be prevented from becoming deformed to suppress reduction in the torque transmission capacity as well as to prevent occurrence of disadvantages such as clutch slips, rise in temperature or the like. In other respects, the formulation of the present Example is the same as that of Example 1.

Present Example 3 gives rise to advantageous effects similar to those derived in Examples 1 and 2.

### Example 4

A clutch apparatus according to Example 4 of the present invention will now be described with reference to the drawings. Fig.8 is a plan view, viewed from the back side, schematically showing a formulation of a pressure plate in the clutch apparatus according to Example 4 of the present invention. Figs.9(A), 9(B) schematically illustrate a formulation of a pressure plate in the clutch apparatus according to Example 4 of the present invention, wherein Fig.9(A) is an enlarged cross-sectional view taken along line Y-Y' of Fig.8 and Fig.9(B) is an enlarged cross-sectional view taken along line Z-Z' of Fig.8.

In Example 4, a modification of Example 1, a reinforcement portion 17e is provided by embedding in a part of the groove(s) 17c formed in the back side surface of the pressure plate 17. The reinforcement portion 17e serves for enhancing the strength of the pressure plate 17. It is noted that, although the reinforcement portion 17e is formed in each groove(s) 17c, such reinforcement portion 17e may be omitted in certain one(s) of the groove(s) 17c. It is also noted that, although the sole reinforcement portion 17e is formed in one groove 17c, a plurality of the reinforcements may be provided in one groove 17c. Although the reinforcement portion 17e is formed in Fig.8 in an inner rim part of the groove(s), the reinforcement portion 17e may also be formed in an intermediate part or in an outer rim part of the groove(s) 17c. Moreover, such reinforcement portion 17e may be provided in the pressure plate of Examples 2 or 3 (the pressure plate 17 of Fig.4 or Fig.6). In other respects, the formulation of the present Example is the same as that of Example 1.

In Example 4, the same advantageous results as those of Example 1 may be derived. In addition, the pressure plate 17 can be enhanced in strength by the reinforcement portion 17e provided by embedding in a part of the groove 17c.

The particular exemplary embodiments or examples may be modified or adjusted within the gamut of the entire disclosure of the present invention, inclusive of claims and drawings, based on the fundamental technical concept of the invention. Moreover, a variety of combinations or selection of elements herein disclosed (elements of claims, Examples and drawings) may be made within the concept of the claims of the present invention. It is to be understood that the present invention may include a variety of changes or modifications that may occur to those skilled in the art in accordance with the total disclosures inclusive of the claims and the drawings as well as the technical concept of the invention.

### [Explanation of symbols]

- 1: clutch apparatus
- 10: crankshaft
- 11: flywheel
- 12: bolt(s)
- 13: clutch cover
- 14: bolt(s)
- 15: diaphragm spring
- 16: fulcrum member
- 17,117: pressure plates
- 17a, 117a: lug (protrusion) portion(s)
- 17b: seat portion(s)
- 17c, 17d: grooves
- 17e: reinforcement portion(s)
- 18: strap(s) (leaf spring(s))
- 19: retaining member(s)
- 20: rivet(s)
- 21: tubular member
- 22: sleeve
- 23: release bearing
- 30: clutch disk
- 31: friction material
- 32: lining plate
- 33: rivet(s)
- 34, 35: side plates
- 36: hub member
- 37: elastic member
- 38, 39: thrust members
- 40: Belleville spring
- 41: input shaft for a transmission system

## Claims

1. A clutch apparatus, comprising:
a clutch disk arranged rotatably and coaxially with a flywheel which is arranged rotatably; the clutch disk being capable of frictionally engaging with the flywheel; and
a pressure plate configured for pressing the clutch disk onto the flywheel; the pressure plate being capable of frictionally engaging with the clutch disk; wherein,
the pressure plate includes a stress relaxing section in a back side surface thereof which is opposite a frictional surface thereof for the clutch disk; the stress relaxing section allowing the back side surface of the pressure plate to accommodate elongation at the time of thermal expansion of the frictional surface of the pressure plate so as to relax a stress responsible for warping caused to the pressure plate;
the stress relaxing section being a groove(s) formed in the back side surface of the pressure plate.

2. The clutch apparatus according to claim 1, wherein,
the groove(s) is so formed as to allow for widening in size of the pressure plate in a circumferential direction, in a radial direction or in both the circumferential and radial directions about a rotational axis of the pressure plate as center.

3. The clutch apparatus according to claim 1 or 2, wherein,
the groove(s) is formed for extending in the circumferential direction, in the radial direction or in both the circumferential and radial directions about a rotational axis of the pressure plate as center.

4. The clutch apparatus according to any one of claims 1 to 3, wherein,
the pressure plate has a reinforcement portion(s) which is formed by embedding in a part of the groove(s).

5. The clutch apparatus according to claim 4, wherein,
the groove(s) is formed radially of the rotational axis of the pressure plate as center;
the reinforcement portion(s) being formed on a line(s) of extension of the groove(s).

6. The clutch apparatus according to claim 1, wherein,
the pressure plate includes a plurality of circumferentially extending lug portion(s) each operating as a point acted on by a diaphragm spring;
the groove(s) being formed on both circumferential sides of the lug portion(s).

7. The clutch apparatus according to claim 1, wherein,
the pressure plate includes a plurality of circumferentially extending lug portion(s) each operating as a point acted on by a diaphragm spring;
the groove(s) being annular and formed more radially inwardly than the lug portion(s).

8. The clutch apparatus according to claim 6, wherein,
the groove(s) is formed radially on both circumferential sides of the lug portion(s).
